Europäisches Patentamt

European Patent Office

Office européen des brevets

(19)

(11) Veröffentlichungsnummer : **0 176 023**
**B1**

(12) **EUROPÄISCHE PATENTSCHRIFT**

(45) Veröffentlichungstag der Patentschrift :
14.02.90

(51) Int. Cl.⁵ : **A 01 C   7/08, A 01 B 69/02**

(21) Anmeldenummer : 85111756.4

(22) Anmeldetag : 17.09.85

(54) Sämaschine.

(30) Priorität : 22.09.84 DE 3434833

(43) Veröffentlichungstag der Anmeldung :
02.04.86 Patentblatt 86/14

(45) Bekanntmachung des Hinweises auf die Patenterteilung : 14.02.90 Patentblatt 90/07

(84) Benannte Vertragsstaaten :
DE FR GB

(56) Entgegenhaltungen :
DE--B-- 3 017 415
FR--A-- 2 351 569
FR--A-- 2 375 813
GB--A-- 2 032 237

(73) Patentinhaber : Amazonen-Werke H. Dreyer GmbH &
Co. KG
Postfach 51
D-4507 Hasbergen-Gaste (DE)

(72) Erfinder : Pelikan, Jean
30, Rue Moxouris
F-78150 Le Chesnay (FR)

(74) Vertreter : Patentanwälte Grünecker, Kinkeldey,
Stockmair & Partner
Maximilianstrasse 58
D-8000 München 22 (DE)

Jouve, 18, rue St-Denis, 75001 Paris, France

## Beschreibung

Die Erfindung betrifft ein Verfahren zum Anlegen von Fahrgassen und eine Vorrichtung zur Durchführung des Verfahrens, wie dies jeweils im Oberbegriff des Anspruchs 1 bzw. Anspruch 2 zum Ausdruck gebracht ist.

Eine Sämaschine, mit der ein gattungsgemäßes Verfahren durchgeführt werden kann ist durch die DE-B 30 17 415 bekannt. Vorteilhaft ist bei dieser Sämaschine, daß in regelmäßigen Abständen Spuren von Saatgut freigehalten werden, in denen nachfolgende Arbeitsmaschinen mit größeren Arbeitsbreiten fahren können. Bisher sind diese sog. Fahrgassensysteme auf Kombinationen zwischen der Arbeitsbreite der Sämaschine und der Arbeitsbreite der nachfolgenden Arbeitsmaschinen, wie Düngerstreuer und Feldspritze, beschränkt, bei denen die Arbeitsbreite der nachfolgenden Arbeitsmaschine ein ganzes Vielfaches der Arbeitsbreite der Sämaschine ist. Dieses ist sehr unbefriedigend, weil der Landwirt, wenn er eine neue Maschine kauft, in der Wahl der Arbeitsbreite, wenn er das Fahrgassensystem konsequent anwenden will, sehr eingeschränkt ist.

Die Schaltvorrichtung der bekannten Sämaschine weist eine Zählvorrichtung auf, so daß entsprechend dem vorgegebenen Zählrhythmus der Schaltvorrichtung die Saatgutzufuhrunterbrechungselemente betätigt werden, damit die Saatgutzufuhr zu den bestimmten Säscharen unterbrochen wird. Die periodische Wiederkehr wird automatisch durch den gewählten Zählrhythmus der Schaltvorrichtung bestimmt. Der Landwirt braucht nicht zu überlegen und aufzupassen, daß auch in dem richtigen Abstand jeweils eine Fahrgasse angelegt wird.

Bei der bekannten Sämaschine sind ein Paar Saatgutzufuhrunterbrechungselemente vorgesehen, die jeweils gleichzeitig von der Schaltvorrichtung betätigt werden, um jeweils eine Fahrgasse anzulegen. Diese Fahrgasse wird immer an der gleichen Stelle, bezogen auf die Sämaschine bzw. dem besäten Feldstreifen, angelegt. Die Arbeitsbreite der Düngerstreuer und Feldspritzen, die für die nachfolgenden Pflanzenschutz- und Düngemaßnahmen bei dem Fahrgassenverfahren eingesetzt werden, um genau « Anschlußfahren » zu können, muß immer ein ganzes Vielfaches der Arbeitsbreite der Sämaschine sein. Bei dieser bekannten Sämaschine ist es möglich, verschiedenste Fahrgassensysteme für unterschiedliche Arbeitsbreiten der nachfolgenden Arbeitsmaschinen, wie Düngerstreuer und Feldspritze anzulegen. Die Arbeitsbreite dieser nachfolgenden Maschinen ist jedoch immer ein ganzes Vielfaches der Arbeitsbreite der Sämaschine.

Der Erfindung liegt die Aufgabe zugrunde, das bisher bekannte Verfahren wesentlich variabler zu gestalten und eine entsprechende Vorrichtung hierfür vorzuschlagen.

Diese Aufgabe wird erfindungsgemäß durch den kennzeichnenden Teil des Anspruchs 1 sowie durch den kennzeichnenden Teil des Anspruchs 2 für die Vorrichtung entsprechend gelöst. Infolge dieser Maßnahmen sind verschiedenste Kombinationen zwischen der Arbeitsbreite von Sämaschinen und der Arbeitsbreite von Düngerstreuern und Feldspritzen möglich. So kann beispielsweise mit einer 4 m breiten Drillmaschine ein Fahrgassensystem für Düngerstreuer und Feldspritzen mit 18 m Arbeitsbreite angelegt werden oder mit einer 4,8 m breiten Drillmaschine ein Fahrgassensystem für Düngerstreuer und Feldspritzen mit 12 m Arbeitsbreite angelegt werden. Entscheidend ist, daß die Fahrgassen abwechselnd von der Mitte der Drillmaschine angelegt werden, so daß sowohl bei zwei links und rechts von der Mitte verlaufenden spurbildenden Streifen als auch bei jeweils einem Streifen links und rechts ein variables Fahrgassensystem erreicht wird, da zwei unabhängig voneinander zu betätigende Schaltungen vorgesehen sind.

Durch die DE-A 15 57 906 ist eine Sämaschine mit als zwei Schieber ausgebildeten Saatgutzufuhrunterbrechungselementen bekannt. An diesen Schiebern sind Bowdenzüge mit Bedienungshebeln angeordnet, so daß diese Schieber gemeinsam bzw. getrennt über die Bedienungshebel durch den Landwirt vom Schleppersitz aus betätigt werden können. Über die Schieber kann die Saatgutzufuhr zu den bestimmten Säscharen gleichzeitig oder aber die Saatgutzufuhr unabhängig voneinander zu den Säscharen unterbrochen werden. In welchem Rhythmus dieses geschieht, ist diesem Stand der Technik nicht zu entnehmen. Nachteilig ist jedoch in jedem Falle, daß der Landwirt jeweils immer wieder entscheiden muß, bei welcher Feldüberfahrt wieder eine Fahrgasse angelegt werden muß. Hierbei ist der Landwirt vollkommen überfordert. Aus diesem Grunde haben sich auch nur Fahrgassenschaltungen mit einer automatischen Betätigung durch Schaltvorrichtungen mit Zählvorrichtungen durchgesetzt.

In einer Ausgestaltung der Erfindung ist vorgesehen, daß an der Sämaschine zumindest für vier freizuhaltende Streifen Saatgutzufuhrunterbrechungselemente angeordnet sind. Die sich hier ergebende Anordnung von zwei einzelnen Fahrgassenschaltungen reicht in den meisten Fällen aus.

Die Erfindung wird anhand von Zeichnungen näher erläutert. Hierbei zeigen

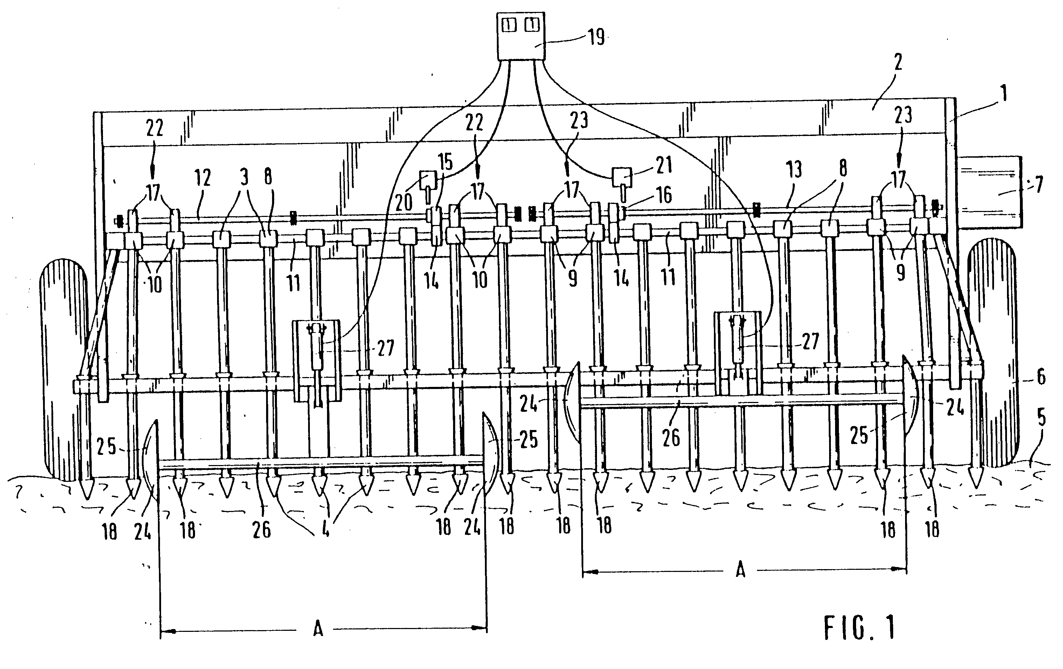

Figur 1 eine erfindungsgemäß ausgebildete Sämaschine in der Ansicht von hinten,

Figur 2 ein erstes erfindungsgemäßes Fahrgassensystem in Prinzipdarstellung in der Draufsicht und

Figur 3 ein weiteres erfindungsgemäßes Fahrgassensystem ebenfalls in Prinzipdarstellung und in der Draufsicht.

Die Sämaschine 1 weist den Vorratsbehälter 2 auf, aus dem das Saatgut durch an dem Vorratsbehälter 2 befindlichen Auslauföffnungen mit

Hilfe der Dosierorgane über die Säschare 4 in dosierbaren Mengen in den Boden 5 eingebracht wird. Während des Betriebes stützt sich die Sämaschine 1 über die Laufräder 6 auf dem Boden ab. Von dem Laufrad 6 aus werden über das einstellbare Regelgetriebe die Dosierräder 8 der Dosierorgane 3 angetrieben. Die mit 9 und 10 bezeichneten Dosierräder sind als Sastgutzufuhrunterbrechungselemente ausgebildet. Diese als Saatgutzufuhrunterbrechungselemente ausgebildeten Dosierräder 9 und 10 sind frei drehbar auf der Säwelle 11, die von dem Regelgetriebe 7 angetrieben wird, gelagert. Parallel zu der Säwelle 11 sind an dem Vorratsbehälter 2 oberhalb der Dosierräder 9, 10 die beiden Vorgelegewellen 12 und 13 gelagert. Jede Vorgelegewelle 12 und 13 ist über den Zahnradtrieb 14, der die Schlingfederkupplung 15 und 16 aufweist, drehmomentübertragbar mit der Säwelle 11 verbunden. Weiterhin sind auf den Vorgelegewellen 12 und 13 jeweils die Zahnräder 17 drehfest angeordnet, deren Verzahnung in die Verzahnung der frei drehbar auf der Säwelle 11 angeordneten Dosierräder 9, 10 eingreift. Somit werden die Dosierräder 9, 10 über die Vorgelegewellen 12 und 13 angetrieben, wenn die Schlingfederkupplung 15 eingeschaltet ist. Die Dosierräder 9, 10 sind jeweils den Säscharen 18 zugeordnet, die in dem Bereich der von Saatgut freizuhaltenden Spuren, die die Fahrgassen für nachfolgende Arbeitsmaschinen ergeben, angeordnet sind.

Weiterhin ist an der Sämaschine 1 die Schaltvorrichtung 19 angeordnet, die mittels der Schaltelemente 20 und 21, die als Hubmagnete ausgebildet sind, die Schlingfederkupplungen 15 und 16 betätigen. An der Sämschine 1 sind die Dosierräder 9, 10, die die Saatgutzufuhrunterbrechungselemente bei der Unterbrechung ihres Antriebes für die Schlingfederkupplungen 15 und 16 durch die Hubmagneten 20 und 21 bilden, für vier freizuhaltende Streifen angeordnet, wobei der Abstand A zwischen den Mittellinien der freizuhaltenden Streifen, die gleichzeitig von Saatgut freigehalten werden, jeweils der Spurweite der nachfolgenden Arbeitsmaschine entspricht. Hierbei sind die Dosierräder 10 von der Maschinenmitte ausgehend spiegelsymmetrisch zu den Dosierrädern 9 angeordnet.

Die Dosierräder 9 und 10 sind Säscharen 18 derart zugeordnet, daß durch die Abschaltung des Saatgutzuflusses durch die Dosierräder 9 oder 10 über die Schaltvorrichtung 19 zu diesen Säscharen 18 wahlweise Fahrgassen in dem Abstand A, der der Spurweite der nachfolgenden Arbeitsmaschine entspricht, angelegt werden können, die versetzt zur Maschinenmitte liegen. Bei dem gezeigten Beispiel sind hierzu zwei unabhängig voneinander zu schaltende Paare 22, 23 von Dosierrädern 10 bzw. 9 für das Anlegen von Fahrgassen vorgesehen. Das Paar 22 der Dosierräder 10 und das Paar 23 der Dosierräder 9 werden von der eine Zählvorrichtung aufweisenden Schaltvorrichtung 19 über die Schlingfederkupplungen 15 und 16 unabhängig voneinander in periodischer Wiederkehr abwechselnd ausgeschaltet, wobei die Saatgutzufuhr zu den entsprechenden Säscharen, die die Fahrgassen anlegen, unterbrochen wird.

Hinter den Säscharen 18 sind jeweils die Fahrgassenspurmarkierungsvorrichtungen 24 angeordnet. Die Fahrgassenspurmarkierungsvorrichtungen 24 weisen jeweils die Spurreißerscheiben 25 auf, die jeweils an der Halterung 26 drehbar gelagert sind. An der Halterung 26 ist jeweils ein Hubzylinder 27 angeordnet, über die die Spurreißerscheiben 25 anzuheben und abzusenken sind. Die Spurreißerscheiben 25 sind jeweils den Säscharen 18 zugeordnet. Die jeweiligen Spurreißerscheiben 25 werden jeweils über die Halterung 26 und die Hubzylinder 27 abgesenkt, wenn den der Spurreißerscheibe zugeordneten Säscharen 18 zum Anlegen von Fahrgassen die Saatgutzufuhr unterbrochen wird. Wenn die Säschare 18 Saatgut in den Boden einbringen, sind die Spurreißerscheiben 25 über die Halterung 26 und den Hubzylinder 27 angehoben worden. Das Anheben und Absenken der Spurreißerscheiben 25 wird ebenfalls von der Schaltvorrichtung 19 gesteuert.

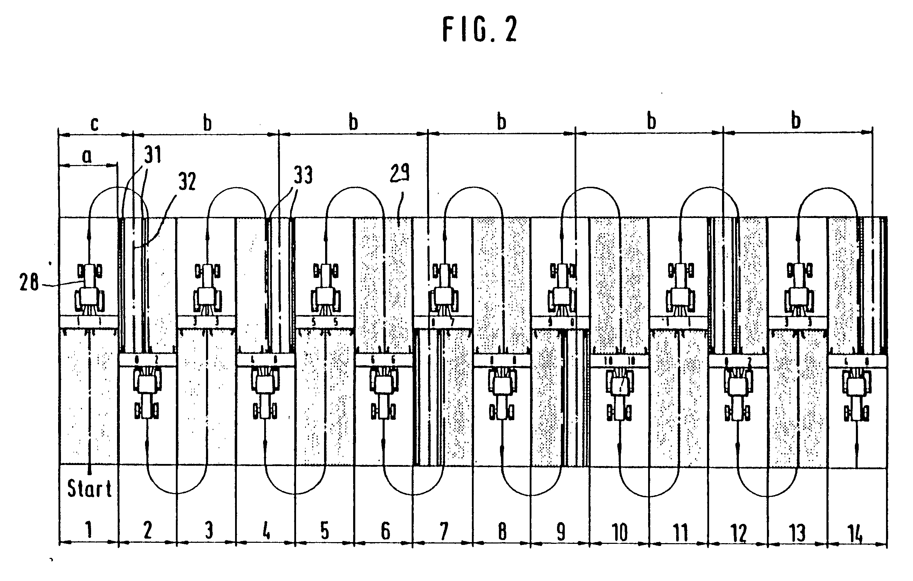

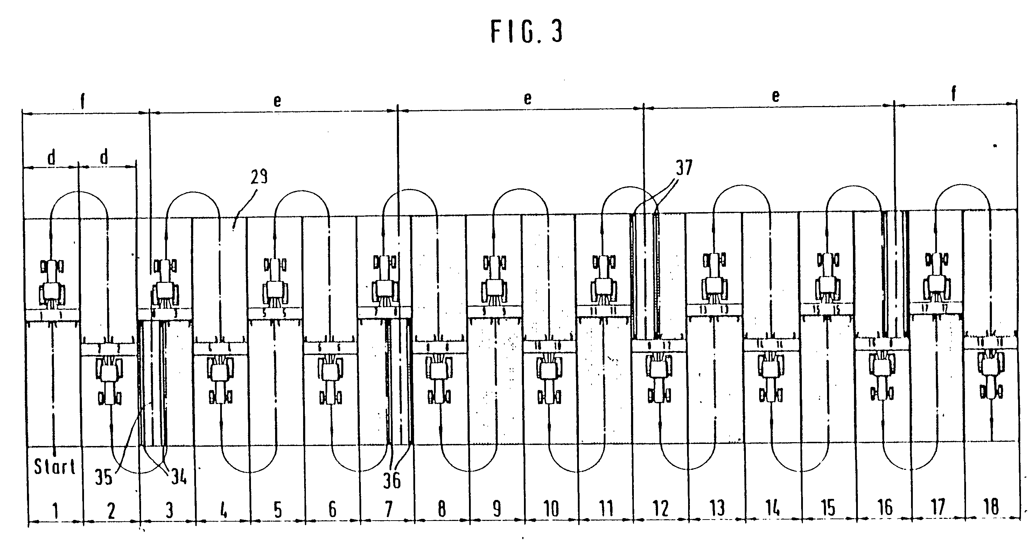

Bei dem an Fig. 2 und 3 nun erläuterten Fahrgassenverfahren wird die Sämaschine 1 von dem Schlepper 28 über das Feld in Hin- und Herfahrt gezogen, wobei die Arbeitsbahnen der Sämaschine einen genauen Anschluß erhalten. Zur Verdeutlichung der mit Saatgut beschickten Fläche 29 durch die Säschare 4 und 18 sind diese Flächen grau angelegt. Die jeweils von Saatgut freigehaltenen Streifen, die die Fahrgassen für die nachfolgenden Arbeitsmaschinen darstellen, sind mit dunkelschwarzen durchzogenen Linien angelegt.

Das Ausführungsbeispiel in Fig. 2 zeigt ein Fahrgassensystem mit einer Arbeitsbreite a von 4,8 m für die Sämaschine 1 und einer Arbeitsbreite b von 12 m für die nachfolgenden Arbeitsmaschinen. Wie aus der Fig. 2 hervorgeht, wird bei der ersten Überfahrt keine Fahrgasse angelegt, sondern erst bei der ersten Rückfahrt, wobei diese Fahrgasse 31 in dem Abstand c, der von der Mittellinie 32 der Fahrgasse 31 aus gemessen wird, zum Feldrand durch Abschalten der Dosierradpaare 23 angelegt wird. Der Abstand c entspricht der Hälfte der Arbeitsbreite b der nachfolgenden Arbeitsmaschine. Bei der dritten Fahrt wird keine Fahrgasse angelegt. Die zweite Fahrgasse wird bei der vierten Überfahrt durch Abschalten der Dosierradpaare 22 angelegt. Dann werden bei den beiden nächsten Überfahrten keine Fahrgassen angelegt, sondern erst wieder bei der siebten Überfahrt und zwar durch Abschalten der Dosierradpaare 22, die auch die zweite Fahrgasse 33 angelegt haben. Die weitere Reihenfolge des Anlegens der Fahrgassen ist zweifelsfrei der Fig. 2 zu entnehmen.

Das Ausführungsbeispiel in Fig. 3 zeigt ein Fahrgassensystem mit einer Arbeitsbreite d von 4 m für die Sämaschine 1 und eine Arbeitsbreite e von 18 m für die nachfolgenden Arbeitsmaschinen. Wie aus Fig. 3 hervorgeht, wird bei den ersten beiden Überfahrten keine Fahrgasse angelegt. Die erste Fahrgasse 34 wird erst bei der dritten Überfahrt in dem Abstand f, der von der Mittellinie 35 der Fahrgasse 34 gemessen wird durch Abschalten der Dosierradpaare 22 angelegt. Der Abstand f entspricht der Hälfte der Arbeitsbreite e der nachfolgenden Arbeitsmaschine. Bei der vierten, fünften und sechsten Überfahrt wird keine Fahrgasse angelegt. Die zweite Fahrgasse 36 wird bei der siebten Überfahrt durch Abschalten der Dosierradpaare 23 angelegt. Dann wird bei der achten, neunten, zehnten und elften Überfahrt keine Fahrgasse angelegt, sondern erst wieder bei der zwölften Überfahrt, und zwar wird diese dritte Fahrgasse 37 von den gleichen Säscharen und Dosierrädern, die auch die zweite Fahrgasse 36 angelegt haben, angelegt. Die weitere Reihenfolge des Anlegens der Fahrgassen ist zweifelsfrei der Fig. 3 zu entnehmen.

**Patentansprüche**

1. Verfahren zum Anlegen von Fahrgassen mit einer Sämaschine, die einen Vorratsbehälter (2) aufweist, aus dem das Saatgut durch Auslauföffnungen in dosierbaren Mengen über in Reihe quer zur Fahrtrichtung angeordnete Säschare (4, 18) dem Boden zugeführt wird, wobei zur Schaffung der Fahrgassen für die Laufräder eines in besonderen Arbeitsgängen nachfolgende Arbeitsmaschinen ziehenden Schleppers innerhalb der Arbeitsbreite der Maschine entweder ein oder mehrere spurbildende Streifen in einer periodischen Wiederkehr durch Abschaltung der Saatgutzufuhr zu den Säscharen (18), welche zum Anlegen der Fahrgassen vorgesehen sind, mit Hilfe von Saatgutzufuhrunterbrechungselementen (9, 10) freigehalten werden, die durch mindestens eine mit einer Zählvorrichtung ausgestattete Schaltvorrichtung (20, 21) automatisch betätigt werden, dadurch gekennzeichnet, daß die Saatgutzufuhrunterbrechungselemente (9, 10), die allen rechts von der Maschinenmitte angeordneten Säscharen zugeordnet sind, unabhängig von denen, die allen links von der Maschinenmitte angeordneten Säscharen zugeordnet sind, betätigt werden.

2. Sämaschine zur Durchführung des Verfahrens nach Anspruch 1, die einen Vorratsbehälter (2) aufweist, aus dem das Saatgut durch Auslauföffnungen in dosierbaren Mengen über in Reihe quer zur Fahrtrichtung angeordnete Säschare (4, 18) dem Boden zuführbar ist, wobei die Saatgutzufuhr zu den Säscharen innerhalb ausgewählter Gruppen von nebeneinander liegenden Säscharen (18) durch jeder Säschar einzeln zugeordnete Saatgutzufuhrunterbrechungselemente (9, 10), die durch eine mit einer Zählvorrichtung ausgestattete Schaltvorrichtung (19) angesteuert werden, in einer periodischen Wiederkehr automatisch abschaltbar ist und wobei diese Gruppen von Säscharen (18) so ausgewählt sind, daß sie durch Abschalten der Saatgutzufuhr innerhalb der Arbeitsbreite der Sämaschine einen oder mehrere von dem Saatgut freigehaltene Streifen bilden können, die als Fahrgassen für die Laufräder eines Schleppers und/oder für später eingesetzte Arbeitsmaschinen dienen und daß mindestens je eine Gruppe dieser ausgewählten Säschare (18) rechts und links von der Maschinenmitte angeordnet ist, dadurch gekennzeichnet, daß die Saatgutzufuhrunterbrechungselemente (9, 10), die der oder allen rechts von der Maschinenmitte angeordneten ausgewählten Gruppe(n) von Säscharen (18) zugeordnet sind, unabhängig von denen, die der oder allen links von der Maschinenmitte angeordneten ausgewählten Gruppe(n) von Säscharen (18) zugeordnet sind, durch je ein Schaltelement (20, 21) betätigt werden können.

3. Sämaschine nach Anspruch 2, dadurch gekennzeichnet, daß an der Sämaschine (1) zumindest für vier spurbildende Streifen Saatgutzufuhrunterbrechungselemente (9, 10) angeordnet sind.

**Claims**

1. Method of establishing tramlines, utilising a seed drill, which includes a hopper (2), from which the seed material is supplied in meterable quantities to the ground through discharge apertures via sowing coulters (4, 18), which are disposed in a row transversely with respect to the direction of travel, wherein, to create the tramlines for the running wheels of a tractor, which tows production machines which follow one another in separate work processes within the working width of the drill, either one track-forming strip or a plurality of track-forming strips is or are kept free in a periodic cycle by switching-off the supply of seed material to those sowing coulters (18), which are provided to establish the tramlines, by means of seed material supply-interrupting means (9, 10), which are automatically actuated by at least one switching means (20, 21), which is provided with a counting device, characterised in that the seed material supply-interrupting means (9, 10), which are associated with all the sowing coulters disposed to the right of the drill centre, are actuated independently of those means which are associated with all the sowing coulters disposed to the left of the drill centre.

2. Seed drill for accomplishing the method according to claim 1, which includes a hopper (2), from which the seed material is suppliable in meterable quantities to the ground through discharge apertures via sowing coulters (4, 18), which are disposed in a row transversely with respect to the direction of travel, wherein the supply of seed material to the sowing coulters within selected groups of adjacently situated sowing coulters (18) can automatically be switched-off in a periodic cycle by seed material supply-interrupting means (9, 10), which are individually associated with each sowing coulter and are actuated by a switching means (19), which is provided with a counting device, and wherein these groups of sowing coulters (18) are selected so that they can form one strip or a plurality of strips, which are kept free of the seed material by switching-off the supply of seed material within the working width of the seed drill, such strips serving is tramlines for the running wheels of a tractor and/or for subsequently utilised production machines, and so that at least one respective group of these selected sowing coulters (18) is disposed to the right of the drill centre and at least one respective group is disposed to the left of the drill centre, characterised in that the seed material supply-interrupting means (9, 10), which are associated with the selected group or all the selected groups of sowing coulters (18) disposed to the right of the drill centre, may be actuated by a respective switching means (20, 21) independently of those means which are associated with the selected group or all the selected groups of sowing coulters (18) disposed to the left of the drill centre.

3. Seed drill according to claim 2, characterised in that seed material supply-interrupting means (9, 10) are disposed on the seed drill (1) for at least four track-forming strips.

**Revendications**

1. Procédé pour réaliser des couloirs de passage à l'aide d'un semoir comportant un réservoir d'alimentation (2) à partir duquel la semence est introduite dans le sol par des socs de semoir (4, 18) disposés suivant une rangée transversalement à la direction de déplacement et suivant des quantités dosées par l'intermédiaire d'orifices de sortie, et pour créer des couloirs de passage pour les roues de roulement d'un tracteur qui tire des machines suivantes dans des phases de travail particulières, à l'intérieur de la largeur de travail du semoir, on crée une ou plusieurs bandes formant des traces suivant une répétition périodique en coupant l'alimentation en semence des socs de semoir (18) prévus pour la réalisation des couloirs de passage, à l'aide d'éléments d'interruption de l'alimentation de semence (9, 10), qui sont actionnés automatiquement par au moins un dispositif de commutation (20, 21) muni d'un moyen de comptage, procédé caractérisé en ce que les éléments d'interruption de l'alimentation en semence (9, 10) associés à tous les socs de semoir à droite du milieu de la machine sont actionnés indépendamment de tous les socs de semoir prévus à gauche du milieu de la machine.

2. Semoir pour la mise en œuvre du procédé selon la revendication 1, comportant un réservoir d'alimentation (2) à partir duquel les semences sont introduites dans le sol par des socs de semoir (4, 18) disposés suivant une rangée, transversalement à la direction de déplacement, suivant des quantités dosées, par des orifices de sortie, l'alimentation en semence vers les socs de semoir de groupes choisis de socs (18) juxtaposés pouvant être interrompue par des éléments d'interruption d'alimentation de semence (9, 10) associés séparément à chaque soc de semoir et qui sont commandés par un dispositif de commutation (19) muni d'un moyen de comptage, pour être coupés automatiquement suivant une répétition périodique et ces groupes de socs de semoir (18) sont choisis pour que par coupure de l'alimentation en semence, on puisse former à l'intérieur de la largeur de travail du semoir, une ou plusieurs bandes dans lesquelles il n'y a pas de semence et qui serviront de couloirs de passage pour les roues de roulement d'un tracteur et/ou de machines utilisées ultérieurement et en ce que chaque fois au moins un groupe de ces socs de semoir (18) choisi, est prévu à droite et à gauche du milieu du semoir, semoir caractérisé en ce que les éléments d'interruption de l'alimentation en semence (9, 10) qui sont associés au (x) groupe (s) choisi (s) de socs de semoir (18) tous à gauche ou à droite du milieu du semoir peuvent être actionnés par un élément de commutation (20, 21) respectif, indépendamment du ou des groupes de socs de semoir (18), choisis, situés tous à gauche du milieu de la machine.

3. Semoir selon la revendication 2, caractérisé en ce qu'il (1) comporte des éléments d'interruption de l'alimentation en semence (9, 10) pour former au moins quatre bandes sans semence.

FIG. 1

FIG. 2

FIG. 3